# EUROPÄISCHE PATENTSCHRIFT

(11) **EP 1 506 851 B1**
(45) Veröffentlichungstag und Bekanntmachung des Hinweises auf die Patenterteilung: **29.11.2006**
(21) Anmeldenummer: 04015298.5
(22) Anmeldetag: 30.06.2004
(51) Int. Cl.: B29C 45/50, G01L 1/04

(54) **Druckmesseinrichtung für eine Spritzgiessmaschine**
Pressure measuring device in an injection moulding machine
Dispositif de mesure de pression dans une presse à injecter

(30) Priorität: 14.08.2003 DE 10337551
(43) Veröffentlichungstag der Anmeldung: 16.02.2005
(73) Patentinhaber: Demag Ergotech GmbH, 90571 Schwaig (DE)
(72) Erfinder: Schmidt, Holger, Dipl.-Ing., 06567 Bad Frankenhausen (DE); Krosse, Dietmar, Dipl.-Ing., 06571 Wiehe (DE)
(74) Vertreter: Wilhelm, Ludwig

(56) Entgegenhaltungen:
- EP-A- 1 162 053
- DE-A- 10 104 659
- DE-A- 10 143 472
- DE-A- 19 950 534
- PATENT ABSTRACTS OF JAPAN Bd. 0112, Nr. 34 (M-611), 30. Juli 1987 (1987-07-30) -& JP 62 044417 A (TOYODA AUTOM LOOM WORKS LTD), 26. Februar 1987 (1987-02-26)
- PATENT ABSTRACTS OF JAPAN Bd. 2003, Nr. 11, 5. November 2003 (2003-11-05) -& JP 2003 211506 A (TOSHIBA MACH CO LTD), 29. Juli 2003 (2003-07-29)

## Beschreibung

Die Erfindung bezieht sich auf eine Druckmesseinrichtung für eine Spritzgießmaschine, nach dem Oberbegriff des Patentanspruchs 1.

Zur Ermittlung der auf die Plastifizierschnecke wirkenden Hubkraft als Maß für den Kunststoff-Schmelzedruck im Plastifizierzylinder ist es bekannt (EP 0 350 872 B1, US-A 5 206 034 und US 6 247 913 B1), in dem Antriebszug zwischen Hubantrieb und Plastifizierschnecke einen Lastdetektor einschließlich eines unter Hubkrafteinwirkung elastisch verformbaren Kraftübertragungselements und eines Messwertgebers anzuordnen. Diese bekannten Lastdetektoren haben den Nachteil, dass als Kraftübertragungselement ein separates mechanisches, relativ teures Präzisionsbauteil benötigt wird und, da die Messeinrichtung im Inneren der Einspritzeinheit angeordnet ist, ein Austausch nur sehr zeitaufwändig erfolgen kann. Ist der Lastdetektor in die unmittelbar mit der Plastifizierschnecke gekoppelte Antriebswelle im Wellenbereich zwischen Antriebswellenlagerung und Plastifizierschnecke eingesetzt, so ergibt sich zusätzlich das Problem einer Messwert- und Hilfsenergieübertragung zwischen dem sich mit der Antriebswelle mitdrehenden und dem stationären Teil des Lastdetektors.

Die DE 10104659 offenbart eine Druckmeßeinrichtung für eine Spritzgießmaschine mit einem Laserscanner zur Messung der Formänderung einer querschnittsreduzierten Verformungszone nach dem Oberbegriff der Ansprüche 1 und 4.

Aufgabe der Erfindung ist es, eine Druckmesseinrichtung der eingangs genannten Art zu schaffen, die sich durch eine herstellungsmäßig einfache Bauweise und zugleich eine hohe Messgenauigkeit und -zuverlässigkeit auszeichnet.

Diese Aufgabe wird erfindungsgemäß durch die im Patentanspruch 1 gekennzeichnete Druckmesseinrichtung gelöst.

Erfindungsgemäß ist das elastisch verformbare Kraftübertragungsglied des Lastdetektors, welches in den Kraftweg zwischen Hubantrieb und Plastifizierschnecke eingefügt ist, als integraler, einstückiger Bestandteil eines Getriebeelements des Hubantriebs, und zwar vorzugsweise als im Durchmesser verringerter zylindrischer Wellenabschnitt im Bereich der Schneckenantriebswelle zwischen Antriebswellenlagerung und Plastifizierschnecke, ausgebildet, derart, dass es unter der Hubkrafteinwirkung axial gestaucht und dadurch verkürzt und zugleich im Durchmesser aufgeweitet wird. Der querschnittsverringerte Teilbereich des Getriebeelements ist sehr einfach herzustellen und besitzt, da im Wesentlichen gleichförmig axialkraftbeaufschlagt, eine hohe Ausfallsicherheit und lastabhängig definierte Formänderung, und der Messbereich der erfindungsgemäßen Messeinrichtung lässt sich durch Änderung der effektiven Messstrecke problemlos aufspreizen oder verkürzen.

In weiterer vorteilhafter Ausgestaltung der Erfindung werden die Längen- und/oder Dickenänderungen des elastischen Teilbereichs des Getriebeelements vorzugsweise berührungslos, etwa mit Hilfe eines Laserscanners oder eines induktiven Messwertgebers, ermittelt, was insbesondere bei Ausbildung des Verformungsbereichs in einem rotierenden Getriebeelement den Vorteil hat, dass eine komplizierte Hilfsenergie- und Messsignal-Drehübertragung in Fortfall gerät.

Die Erfindung wird nachfolgend anhand zweier in den Figuren schematisch dargestellter Ausführungsbeispiele näher beschrieben. Es zeigen:
- **Fig. 1**: einen Längsschnitt durch den Hub- und Drehantrieb einer Spritzgießmaschine mit einer Druckmesseinrichtung gemäß einem ersten Ausführungsbeispiel der Erfindung; und
- **Fig. 2**: eine der Fig. 1 entsprechende Darstellung eines zweiten Ausführungsbeispiels.

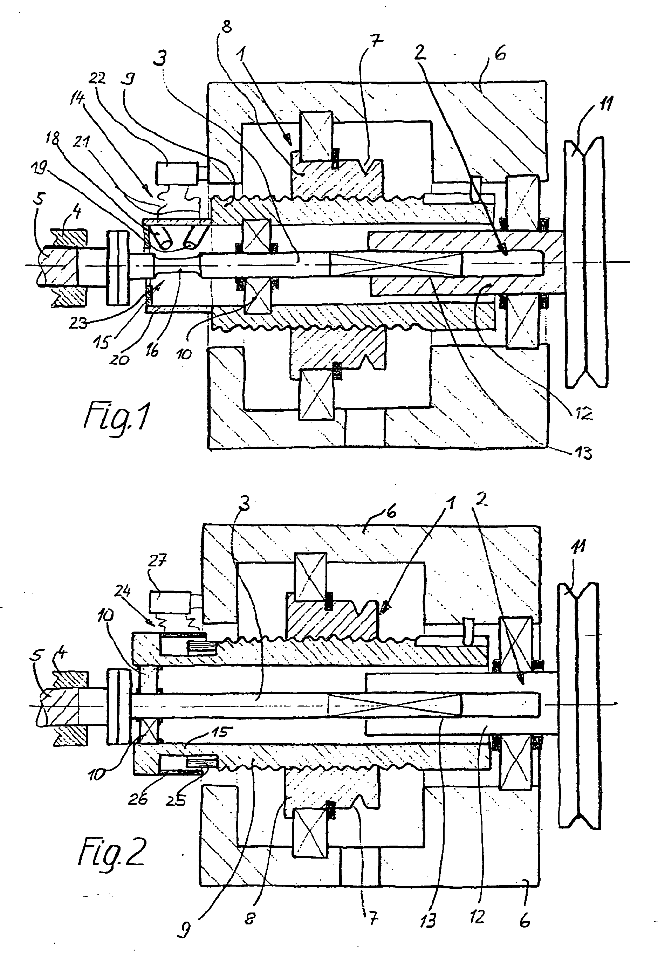

Die in Fig. 1 ausschnittsweise gezeigte Einspritzeinheit einer ansonsten nicht näher dargestellten Spritzgießmaschine enthält einen kombinierten Hub- und Drehantrieb 1, 2 für die Antriebswelle 3 der im Plastifizierzylinder 4 drehbar und axial verschieblich angeordneten Plastifizierschnecke 5.

Der Hubantrieb 1 ist als Spindeltrieb ausgebildet, bestehend aus einer im Gehäuse 6 drehbar, aber axial unverschieblich gelagerten und z.B. über einen Riementrieb 7 angetriebenen Spindelmutter 8 und einer korrespondierenden, axial verschieblich, aber drehfest im Gehäuse 6 angeordneten Spindelwelle 9, deren Hubbewegung über ein Drehlager 10 auf die Antriebswelle 3 und von dieser auf die Plastifizierschnecke 5 übertragen wird.

Der Drehantrieb 2 besteht aus einem im Gehäuse 6 gelagerten, z.B. ebenfalls über eine Riemenscheibe 11 drehbar angetriebenen Wellenzapfen 12, mit dem die Antriebswelle 3 über einen Schiebesitz 13 drehfest, aber dem Hubweg des Hubantriebs 1 entsprechend axial verschieblich verkoppelt ist. In der Befüllund Dosierphase wird die Plastifizierschnecke 5 durch den Drehantrieb 2 rotativ und hiervon unabhängig in der Einspritzphase durch den Hubantrieb 1 translatorisch in Axialrichtung angetrieben, wobei die auf die Schnecke 5 wirkende Axialkraft als Maß für den Kunststoff-Schmelzedruck im Plastifizierzylinder 4 mit Hilfe eines insgesamt mit 14 bezeichneten Lastdetektors gemessen wird.

Gemäß Fig. 1 enthält der Lastdetektor 14 eine einstückig in die Antriebswelle 3 integrierte Verformungszone 15 in Form eines im Durchmesser reduzierten, zylindrischen Wellenabschnitts 16, welcher zwischen der Plastifizierschnecke 5 und der Antriebswellenlagerung 10 angeordnet ist, also in einem von Lagerstellen freigehaltenen Wellenbereich, um Messfehler, bedingt durch Lagerreibungen oder andere Störeinflüsse, weitgehend auszuschalten, sowie einen Messwertgeber, welcher die elastischen Formänderungen, also die Längen- und/oder Dickenänderungen des Wellenabschnitts 16 unter der Hubkrafteinwirkung, berührungslos erfasst und gemäß Fig. 1 aus einem Laserscanner mit einem Lasersender 18 und einem Laserempfänger 19 besteht, die an einer hülsenförmigen Verlängerung 20 der Spindelwelle 9 befestigt und über Hilfsenergie- und Messsignalleitungen 21 mit einer Auswerteschaltung 22 verbunden sind. Der Laserscanner 18, 19 arbeitet mit einer hohen Taktrate von bis zu 400 Hz und sein Messbereich lässt sich auf einfache Weise mit Hilfe der Auswerteschaltung 22 veränderlich einstellen. Durch einen Verschlussdeckel 23 ist die Druckmesseinrichtung 14, 15 gegen Umwelteinflüsse gekapselt, und im Hinblick auf eine gute Zugänglichkeit ist die Verlängerung 20 demontierbar an der Spindelwelle 9 befestigt.

Das Ausführungsbeispiel nach Fig. 2 entspricht weitgehend demjenigen der Fig. 1 und einander entsprechende Komponenten sind durch das gleiche Bezugszeichen gekennzeichnet. Nach Fig. 2 ist die im Querschnitt verringerte Verformungszone 15 jedoch ein integraler Bestandteil der Spindelwelle 9, und als berührungsloser Sensor ist ein induktiver Messwertgeber 24 vorgesehen, der die Längsverschiebungen eines Tauchankers 25 bezüglich einer Messspule 26 erfasst und die entsprechenden Messsignale einer Auswerteschaltung 27 zuführt. Im übrigen ist die Bau- und Funktionsweise dieses Ausführungsbeispiels die gleiche wie die nach Fig. 1.

## Patentansprüche

1. Druckmesseinrichtung für eine Spritzgießmaschine, mit einem der Plastifizierschnecke zugeordneten Dreh- und Hubantrieb und einem mit der Antriebskraft des Hubantriebs kraftbeaufschlagten und unter der Krafteinwirkung des Hubantriebs elastisch verformten Lastdetektor, wobei der Lastdetektor (14) eine als integraler Bestandteil eines hubkraftbeaufschlagten Getriebeelements (3; 9) des Hubantriebs (1) ausgebildete, im Querschnitt reduzierte Verformungszone (15) und einen die Formänderungen der querschnittsreduzierten Verformungszone messenden Sensor (17, 22; 24, 27) enthält, wobei die Verformungszone (15) aus einem im Durchmesser verringerten, zylindrischen Wellenabschnitt (16) der Schneckenantriebswelle (3) im Wellenbereich zwischen Plastifizierschnecke (5) und Antriebswellenlagerung (10) besteht
**dadurch gekennzeichnet,**
**dass** der Hubantrieb als Spindeltrieb mit einer drehangetriebenen, axial unverschieblichen Spindelmutter (8) und einer drehfesten, axial verschieblichen Spindelwelle (9) ausgebildet ist, wobei die Hubbewegung von der Spindelwelle (9) über die Schneckenantriebswelle (3) auf die Plastifizierschnecke (5) übertragen wird, und dass der die Formänderungen messende Sensor (18, 19, 21, 22) mit der Spindelwelle (9) verbunden ist.

2. Druckmesseinrichtung nach Anspruch 1,
**dadurch gekennzeichnet,**
**dass** ein berührungslos messender Sensor (18, 19, 22; 25, 26, 27) vorgesehen ist.

3. Druckmesseinrichtung nach Anspruch 2,
**dadurch gekennzeichnet,**
**dass** als Sensor ein Laserscanner (18, 19) vorgesehen ist.

4. Druckmesseinrichtung für eine Spritzgießmaschine, mit einem der Plastifizierschnecke zugeordneten Dreh- und Hubantrieb und einem mit der Antriebskraft des Hubantriebs kraftbeaufschlagten und unter der Krafteinwirkung des Hubantriebs elastisch verformten Lastdetektor, wobei der Lastdetektor (14) eine als integraler Bestandteil eines hubkraftbeaufschlagten Getriebeelements (3; 9) des Hubantriebs (1) ausgebildete, im Querschnitt reduzierte Verformungszone (15) und einen die Formänderungen der querschnittsreduzierten Verformungszone messenden Sensor (17, 22; 24, 27) enthält,
**dadurch gekennzeichnet,**
**dass** der Hubantrieb als Spindeltrieb mit einer drehangetriebenen, axial unverschieblichen Spindelmutter (8) und einer drehfesten, axial verschieblichen Spindelwelle (9) ausgebildet ist, wobei die Hubbewegung von der Spindelwelle (9) über die Schneckenantriebswelle (3) auf die Plastifizierschnecke (5) übertragen wird, dass der die Formänderungen messende Sensor (18, 19, 21, 22) mit der Spindelwelle (9) verbunden ist und dass die Verformungszone (15) aus einem im Durchmesser verringerten, zylindrischen Teilabschnitt der Spindelwelle (9) besteht.

5. Druckmesseinrichtung nach Anspruch 4,
**dadurch gekennzeichnet,**
**dass** als Sensor ein induktiver Messwertgeber (25, 26) vorgesehen ist.

## Claims

1. Pressure measuring device for an injection moulding machine having a rotary and lift drive assigned to the plasticizing screw and a load detector that is force-loaded by the driving force of the lift drive and elastically deformed under the effect of the force of the lift drive, wherein the load detector (14) has a deformation zone (15) with a reduced cross section that is designed to be an integral component of a lift force loaded gearing element (3; 9) of the lift drive (1), and a sensor (17, 22; 24,17) measuring the changes in shape of the cross-section reduced deformation zone, wherein the deformation zone (15) consists of a cylindrical shaft section (16) of the screw drive shaft (3) with a reduced cross section in the area of the shaft between the plasticizing screw (5) and the drive shaft bearing (10),
**characterised in that**
the lift drive is designed as a spindle drive with a rotary drive, axially non-displaceable spindle nut (8) and a rotation-fast, axially displaceable spindle shaft (9), whereby the lift movement of the spindle shaft (9) is transmitted via the screw drive shaft (3) to the plasticizing screw (5) and **in that** the sensor (18, 19, 21, 22) measuring the changes in shape is connected to the spindle shaft (9).

2. Pressure measuring device according to claim 1,
**characterised in that**
a sensor (18, 19, 22; 25, 26, 27) is provided that measures in a contactless manner.

3. Pressure measuring device according to claim 2,
**characterised in that**
the sensor is provided in the form of a laser scanner (18, 19).

4. Pressure measuring device for an injection moulding machine with a rotary and lift drive assigned to the plasticizing screw and a load detector that is force-loaded by the driving force of the lift drive and elastically deformed under the effect of force of the lift drive, wherein the load detector (14) has a deformation zone (15) with a reduced cross section that is designed to be an integral component of a lift force loaded gearing element (3; 9) of the lift drive (1), and a sensor (17, 22; 24,17) measuring the changes in shape of the cross section reduced deformation zone,
**characterised in that**
the lift drive is designed as a spindle drive with a rotary driven, axially non-displaceable spindle nut (8) and a rotation-fast, axially displaceable spindle shaft (9), whereby the lift movement of the spindle shaft (9) is transmitted via the screw drive shaft (3) to the plasticizing screw (5), and **in that** the sensor (18, 19, 21, 22) measuring the changes in shape is connected to the spindle shaft (9), and **in that** the deformation zone (15) comprises a cylindrical partial section of the spindle shaft (9) with a reduced diameter.

5. Pressure measuring device according to claim 4,
**characterised in that**
the sensor is provided in the form of an inductive pickup device (25, 26).

## Revendications

1. Dispositif de mesure de pression pour une machine à mouler par injection, avec un entraînement de rotation et de course affecté à la vis de plastification et un détecteur de charge soumis à la force d'entraînement de l'entraînement de course et déformé de manière élastique sous l'effet de la force de l'entraînement de course, le détecteur de charge (14) contenant une zone de déformation (15) réalisée comme composant intégral d'un élément d'engrenage soumis à la force de course (3, 9) de l'entraînement de course (1) à section transversale réduite et un capteur qui mesure les changements de forme de la zone de déformation à section transversale réduite (17, 22, 24, 27), la zone de déformation (15) étant composée d'une section d'arbre cylindrique à diamètre réduit (16) de la transmission à vis sans fin (3) dans la zone d'arbre située entre la vis de plastification (5) et le palier de l'arbre d'entraînement (10),
**caractérisé en ce que**
l'entraînement de course est réalisé sous forme d'entraînement à broche avec un écrou de broche (8) entraîné par rotation ne pouvant pas être déplacé axialement et un arbre à broche (9) résistant à la rotation pouvant être déplacé axialement, le mouvement de course étant transmis à la vis de plastification (5) par l'arbre à broche (9) via la transmission à vis sans fin (3) et **en ce que** le capteur (18, 19, 21, 22) qui mesure les changements de forme est relié à l'arbre à broche (9).

2. Dispositif de mesure de pression selon la revendication 1,
**caractérisé en ce**
**qu'**un capteur mesurant sans contact (18, 19, 22, 25, 26, 27) est prévu.

3. Dispositif de mesure de pression selon la revendication 2,
**caractérisé en ce**
**qu'**un scanneur à laser (18, 19) est prévu comme capteur.

4. Dispositif de mesure de pression pour une machine à mouler par injection, avec un entraînement de rotation et de course affecté à la vis de plastification et un détecteur de charge soumis à la force d'entraînement de l'entraînement de course et déformé de manière élastique sous l'effet de la force de l'entraînement de course, le détecteur de charge (14) contenant une zone de déformation (15) réalisée comme composant intégral d'un élément d'engrenage soumis à la force de course (3, 9) de l'entraînement de course (1) à section transversale réduite et un capteur qui mesure les changements de forme de la zone de déformation à section transversale réduite (17, 22, 24, 27),
**caractérisé en ce que**
l'entraînement de course est réalisé sous forme d'entraînement à broche avec un écrou de broche (8) entraîné par rotation ne pouvant pas être déplacé axialement et un arbre à broche (9) résistant à la rotation pouvant être déplacé axialement, le mouvement de course étant transmis à la vis de plastification (5) par l'arbre à broche (9) via la transmission à vis sans fin (3), **en ce que** le capteur (18, 19, 21, 22) qui mesure les changements de forme est relié à l'arbre à broche (9) et **en ce que** la zone de déformation (15) est composée d'une section partielle cylindrique à diamètre réduit de l'arbre à broche (9).

5. Dispositif de mesure de pression selon la revendication 4,
**caractérisé en ce**
**qu'**un capteur de mesure inductif (25, 26) est prévu comme capteur.
